# EUROPÄISCHE PATENTANMELDUNG

(11) **EP 2 827 017 A1**
(43) Veröffentlichungstag der Anmeldung: **21.01.2015**
(21) Anmeldenummer: 13176836.8
(22) Anmeldetag: 17.07.2013
(51) Int. Cl.: F16D 65/12, F16D 59/02

(54) **Reibbelag für elektromagnetisch öffnende Federdruckbremsen für Aufzüge**

(71) Anmelder: Chr. Mayr GmbH & Co. KG, 87665 Mauerstetten (DE)
(72) Erfinder: Huber, Johann, 87782 Oberegg (DE)
(74) Vertreter: Ruschke, Hans Edvard

(57) **Zusammenfassung**

Ringförmiger Reibbelag für elektromagnetisch öffnende Federdruckbremsen (FDB) für Personen- und Lastenaufzüge, wobei der Reibbelag (R) in Richtung parallel zur Mittelachse (A) aus zwei miteinander stoffschlüssig verbundenen Schichten unterschiedlicher Härte besteht, nämlich aus einer dem Reibbelagträger zugewandten Reibbelagschicht geringer Härte und aus einer der Gegenreibfläche zugewandten Reibbelagschicht hoher Härte. Zur thermischen Entlastung des Reibbelages beim Bremsen und somit zum Erreichen möglichst geringer Verzüge und Verschleisswerte gegenüber metallischen und keramischen Gegenreibflächen weist der Reibbelag (R) im Bereich der Reibbelagschicht geringerer Härte und/oder im Bereich der Reibbelagschicht hoher Härte mehrere vom Innendurchmesser des Reibbelages (R) zum Aussendurchmesser des Reibbelages (R) verlaufende, umfangsmässig verteilte, radial sich erstreckende Aussparungen oder Schlitze (S) auf, die sich ganz oder teilweise in die Tiefe des zweilagigen Reibbelages hinein erstrecken.

## Beschreibung

Bei der vorliegenden Erfindung handelt es sich um einen neuartigen Reibbelag zur Verwendung in sogenannten Haltebremsen für Aufzüge.

Moderne Aufzugsanlagen sind üblicherweise mit regelbaren Antrieben ausgerüstet, die im Normalbetrieb sämtliche Bewegungsprofile der Anlage einschließlich der Beschleunigungs- und Bremsvorgänge ausschließlich über den Antriebsmotor realisieren. Dabei übernehmen die vorhandenen Bremsen im Normalbetrieb nur eine reine Haltefunktion beim Stillstand der Kabine und verrichten dabei keine Reibarbeit. Lediglich in Notsituationen, die bei Stromausfall, unkontrollierter oder unbeabsichtigter Bewegung entstehen, muss die Bremse auch in der Lage sein, eine dynamische Bremsung des Aufzugs auszuführen, wobei die gesamte Bewegungsenergie des Systems beherrscht werden muss.

Im Zuge der technischen Entwicklung zeichnet sich bei Aufzügen ein Trend zu kompakteren Baugrößen der gesamten Anordnung (Antriebseinheit einschließlich der Bremse) ab, und zwar bei gleichzeitiger Forderung nach zunehmenden Bremsdrehmomenten.

Grundsätzlich sind hohe statische Bremsdrehmomente bei kleiner werdender Baugröße der Bremse nur durch hohe Betätigungskräfte und eine dadurch bedingte hohe Flächenpressung an den Kontaktflächen zwischen Reibbelag und Gegenreibfläche zu erreichen, was technisch durch eine Kombination aus harten Reibbelägen auf Harzbasis und metallischen oder keramischen Gegenreibflächen realisiert werden kann.

Nachteilig an der Verwendung der genannten harten Reibbeläge auf Harzbasis sind deren unzureichende Elastizität und deren unzureichendes Deformationsvermögen. Bei Bremsvorgängen mit hoher Reibarbeit kommt es bei Bremsrotoren, die mit Reibbelägen bestückt sind, zu oberflächlichem Temperatureintrag und damit zu Verwerfungen des Rotors, die durch die unzureichende Elastizität der harten Reibbeläge nicht ausgeglichen werden kann. Außerdem weisen die Gegenreibflächen meist fertigungsbedingte Formabweichungen auf. Zu diesen Formabweichungen addieren sich Verwerfungen, die sich durch den oberflächlichen Temperatureintrag bei Bremsvorgängen und den sich dabei einstellenden Temperaturgradienten innerhalb der Gegenreibfläche (Reibfläche heiß, Rückseite kalt) ergeben. Auch diese Formabweichungen und Verwerfungen im Bereich der Gegenreibfläche können durch die harten Reibbeläge wegen deren unzureichender Elastizität nicht ausgeglichen werden.

Durch die beschriebenen Formabweichungen und Verwerfungen im Bereich des Rotors und der Gegenreibflächen kommt es letztlich zu lokal überhöhten Flächenpressungen und als Folge davon zu lokalen Temperaturspitzen und zu hohem Verschleiß mit verringerter Lebensdauer der Reibbeläge.

Ein wichtiger Faktor zur Erhöhung der Lebensdauer und Funktionalität von Reibbelägen speziell bei Haltebremsen für Aufzüge ist daher eine gleichmäßige und vor allem im Betrieb gleichbleibende Flächenpressung zwischen dem Reibbelag und der Gegenreibfläche, gepaart mit dem Vermeiden lokaler Temperaturspitzen auf dem Reibbelag mit der Folge von unerwünschten temperaturbedingten Verwerfungen der Gegenreibfläche und unerwünschten temperaturbedingten Verwerfungen des Reibbelages bzw. des Reibbelagträgers, d.h. des Bremsrotors insgesamt.

Aus dem Stand der Technik sind Reibelemente für Bremsen beispielsweise in Schienenfahrzeugen bekannt, wie sie in der DE 20 2011 001 991 U1 offenbart sind. Hierbei wird beschrieben, dass an einem Bremsbelagträger für Scheibenbremsen mehrere einzelne Reibelemente über Spannfedern elastisch befestigt sind. Mit dieser Anordnung wird das Ziel verfolgt, dass die einzelnen Reibelemente mit möglichst gleichmäßig verteilter Flächenpressung mit der Gegenreibfläche (hier einer Bremsscheibe) in Kontakt gebracht werden.

Nachteilig an diesem voranstehend beschriebenen Stand der Technik der DE 20 2011 001 991 U1 ist der sehr hohe technische Aufwand zur Erzielung des gewünschten Effektes und die mangelnde technische Anwendbarkeit der beschriebenen Anordnung bei elektromagnetischen Federdruckbremsen, weil elektromagnetische Federdruckbremsen mit sehr geringen Betätigungs-Hüben der Reibelemente arbeiten müssen, weil sonst die Magnetkraft zum Lüften der Bremse nicht ausreichen könnte, vor allem dann, wenn starke Druckfedern zum Erreichen hoher Haltekräfte / Bremsmomente eingesetzt werden.

In der DE 28 53 802 A1 der Anmelderin ist eine elektromagnetisch lüftbare Federdruckbremse beschrieben, die beim Anziehen bzw. beim Abfallen und beim Abbremsen möglichst geräuschlos sein soll, ohne deshalb einen hohen konstruktiven Aufwand zu erfordern. Zu diesem Zweck wird in dieser Vorveröffentlichung u.a. gelehrt, auf den scheibenförmigen Reibbelagträger (d.h. den Bremsrotor) beidseitig eine mindestens 1 mm starke Gummischicht aufzuvulkanisieren, auf der jeweils der Reibbelag befestigt wird, sodass im Ergebnis eine zweilagige Bremsbelags-Struktur vorgesehen wird, und zwar letztendlich aus Gründen der Geräuschreduzierung.

Bei der DE 28 53 802 A1 liegen einzelne Schichten vor, nämlich in Form des Reibbelagträgers, der Elastomerschicht und des Reibbelages, die miteinander durch ein Klebe- oder Vulkanisationsverfahren verbunden werden müssen, wobei vor allem die Verbindung zwischen Elastomerschicht und Reibbelag wegen deren unterschiedlicher chemischer Beschaffenheit technisch problematisch und daher teuer ist. Hinsichtlich der Schwankungen der Flächenpressung am Reibkontakt zwischen Reibbelag und Gegenreibfläche stellt die DE 28 53 802 A1 gegenüber dem damaligen Stand der Technik bereits eine Verbesserung dar, was jedoch nicht die Zielsetzung der DE 28 53 802 A1 war und was durch die geringe Schichtdicke der Elastomerschicht von ca. 1 mm aus heutiger Sicht auch nicht dem Optimum entspricht. Des weiteren weist die in der DE 28 53 802 A1 beschriebene Elastomerschicht einen signifikant anderen TemperaturausdehnungsKoeffizienten auf als der dort verwendete organische Reibbelag, weshalb es bei Temperaturänderungen zwischen der Elastomerschicht und dem Reibbelag zu unterschiedlichen Wärmedehnungen und als Folge zu erhöhten thermischen Spannungen und thermisch bedingten Verzügen kommt.

Daneben unterscheiden sich die Wärmeausdehnungskoeffizienten der Reibbeläge selbst und die des meist metallischen oder aus einem Faserverbundwerkstoff bestehenden Reibbelagträgers. Durch diese unterschiedlichen Wärmeausdehnungs-Koeffizienten und durch den bei Bremsvorgängen einseitigen Wärmeeintrag in den mit der vorzugsweise metallischen oder keramischen Gegenreibfläche in Kontakt stehenden Reibbelag neigen auch Reibbeläge, die über eine Elastomerschicht mit dem Reibbelagträger verbunden sind, zu thermischen Verwerfungen oder Verzügen der Reibbeläge selbst und führen auch zu thermischen Verzügen des gesamten Rotors und der Gegenreibfläche, die durch die Elastizität der Elastomerschicht nicht ganz ausgeglichen werden können. Dabei sind die Reibbeläge selbst und die Verbindungsschichten hohen Belastungen ausgesetzt und es kommt lokal zu überhöhter Flächenpressung. Dadurch kann sich der Verschleiß der Reibbeläge wieder erhöhen.

In der JP 5-296269 vom 9.11.1993 wird ein einlagiger ringförmiger Reibbelag beschrieben, auf dessen Stirnfläche / Reibfläche radial verlaufende Schlitze vorgesehen sind, die am inneren bzw. äusseren Umfang des ringförmigen Reibbelages münden, um dadurch zu erreichen, dass pulverförmiger Abrieb, der zu Schwankungen des zur Verfügung stehenden Bremsmomentes und zu raschem Verschleiß der Bremse führt, auch dann problemlos aus der Bremse abgefördert werden kann, wenn der in der Bremse zur Verfügung stehende Luftspalt eng ist.

Hiernach ist es die der vorliegenden Erfindung zu Grunde liegende Aufgabe, einen Reibbelag für elektromagnetisch öffnende Federdruckbremsen für Aufzüge dahingehend zu verbessern, dass sich dieser mit möglichst geringem technischem Aufwand prozesssicher herstellen lässt, dass möglichst jedwede lokale thermische Überhitzung auch bei wiederholter Reibarbeit in Notfällen (wie bei einer Arbeitsbremse) vermieden wird, nachdem solcherart thermische Überhitzung aufgrund unterschiedlicher Wärmeausdehnungskoeffizienten der verschiedenen miteinander kooperierenden Materialien zu unerwünschten (häufig sinusförmigen) Verwerfungen des Bremsrotors aus Bremsbelagträger und Bremsbelag und durch den einseitigen Wärmeeintrag zu Verwerfungen der Gegenreibflächen führen kann, was besonders dann störend ist, wenn der zur Verfügung stehende Bauraum der Bremse aufgrund der Forderung nach kompakter Bauweise trotz hoher zu beherrschender Bremsmomente nur klein sein darf, wie dies bei elektromagnetisch gelüfteten Bremsen der Fall ist.

Es soll also bei Reibbelägen eine Verbesserung gegenüber dem bekannten Stand der Technik vorgesehen werden, die eine möglichst gleichmäßig verteilte hohe Flächenpressung bei gleichzeitiger Vermeidung von hohem Verschleiß und von lokalen thermischen Überhitzungen zwischen Reibbelag und Gegenreibfläche sicherstellt, die kostengünstig herstellbar und im Zusammenwirken mit elektromagnetischen Federdruckbremsen problemlos technisch anwendbar und herstellbar ist.

Die Lösung dieser Aufgabe wird durch die Merkmalskombination des Anspruches 1 erreicht.

Dazu wird vorgesehen, den Reibbelag in zwei Bereichen bzw. Schichten unterschiedlicher Härte auszuführen, wobei der gesamte Reibbelag auf ein Trägerteil aufgebracht wird und die dem Trägerteil zugewandte Seite bzw. darauf aufliegende Schicht des Reibbelages eine geringere Härte und somit eine erhöhte Elastizität aufweist, und wobei die vom Trägerteil abgewandte bzw. davon beabstandete und als Reibfläche (zur Aufnahme der Reibarbeit) dienende Schicht des Reibbelages eine höhere Härte und somit verringerte Elastizität hat. Zugleich weist erfindungsgemäß der Reibbelag (R) im Bereich der Reibbelagschicht geringerer Härte (R2) und/oder im Bereich der Reibbelagschicht hoher Härte (R1) mehrere vom Innendurchmesser des Reibbelages (R) zum Außendurchmesser des Reibbelages (R) verlaufende, umfangsmäßig verteilte, radial sich erstreckende Aussparungen (AS) oder Schlitze (S) auf, die sich ganz oder teilweise in die Tiefe des zweilagigen Reibbelages (R1, R2) hinein erstrecken.

Zur Vermeidung der weiter oben beschriebenen thermischen Verwerfungen oder Verzüge und zur Reduzierung der mechanischen Belastungen wird also erfindungsgemäß vorgeschlagen, eine der beiden Reibbelagschichten oder beide Reibbelagschichten gleichermaßen mit Aussparungen oder Schlitzstrukturen zu versehen, die die Reibbeläge teilweise oder auf deren ganzer Dicke durchdringen. Dadurch konnte in Versuchsreihen in der Praxis beobachtet werden, dass die mit den Verwerfungen und Verzügen einhergehenden Probleme der lokalen thermischen Überhitzung und des erhöhten Verschleißes in überraschender Weise deutlich verringert werden. Ein weiterer positiver Effekt der Kombination des aus zwei Schichten, einer Reibbelagschicht geringerer Härte (R2) und einer Reibbelagschicht hoher Härte (R1) aufgebauten und mit einer geeigneten Struktur von Schlitzen (S) oder Aussparungen (AS) versehenen Reibbelages (R) ist eine verbesserte Konstanz des zwischen dem Reibbelag (R) und der Gegenreibfläche (7) erzielten Reibbeiwertes.

Weiterhin ist es vorteilhaft, zwischen der Reibbelagschicht höherer Härte und der Reibbelagschicht geringerer Härte ein bestimmtes Dickenverhältnis einzuhalten, um die gewünschten positiven Effekte besonders wirksam zu erzielen. Dabei hat sich in der Praxis hat sich gezeigt, dass die Reibbelagschicht geringerer Härte mindestens 50% und maximal 80% der Gesamtdicke des Reibbelages einnehmen soll.

Weiterhin hat es sich für die Lösung der Aufgabe als vorteilhaft erwiesen, wenn der Reibbelag geringerer Härte eine Shore-Härte zwischen ca. 30 ShoreD und ca. 50 ShoreD aufweist und wenn der Reibbelag höherer Härte eine Härte von mindestens ca. 65 ShoreD aufweist.

Erfindungsgemäß wird ein Reibbelag vorgeschlagen, der aus einer Reibbelagschicht geringer Härte und aus einer Reibbelagschicht hoher Härte besteht, wobei der Reibbelag durch einen oder mehrere Press- und/oder Walzvorgänge hergestellt wird, so dass eine stoffschlüssige Verbindung zwischen den beiden Reibbelagschichten entsteht.

Dabei sind verschiedene Vorgehensweisen denkbar:
- Pressen oder Walzen einer Kombination von losen Pulvermischungen für beide Reibbelagschichten.
- Pressen oder Walzen einer Kombination bestehend aus dem Vorpressling der ersten Reibbelagschicht und der losen Pulvermischung der zweiten Reibbelagschicht.
- Pressen oder Walzen einer Kombination bestehend aus je einem Vorpressling der Reibbelagschicht geringer Härte und einem Vorpressling der Reibbelagschicht hoher Härte.

Außerdem ist es denkbar, zur Erzielung bestimmter Materialeigenschaften des Reibbelages wie Härte oder Abriebfestigkeit zwischen oder nach den Pressoperationen bzw. zwischen oder nach den Walzprozessen geeignete Härteprozesse durchzuführen.

Die erfindungsgemässen Aussparungen oder Schlitzstrukturen, die mindestens eine Reibbelagschicht ganz oder teilweise durchdringen, können bereits bei einem der Press- oder Walzvorgänge erzeugt oder in einem nachgeschalteten Vorgang durch spanlose oder spanende Formgebung hergestellt werden.

Weitere vorteilhafte Details zur Funktionsweise und Herstellung des erfindungsgemäßen Reibbelages ergeben sich aus den Unteransprüchen sowie aus der Beschreibung der nachstehend genannten Zeichnungen.

Dabei zeigen:
- **Fig. 1**: die Schnittdarstellung einer Zweikreis-Aufzugsbremse;
- **Fig. 2**: einen Querschnitt durch einen Bremsrotor der Aufzugsbremse aus Fig. 1;
- **Fig. 3**: eine vergrößerte Detailansicht A des Bremsrotors aus Fig. 2;
- **Fig. 4**: die Vorderansicht und eine Draufsicht auf einen Bremsrotor, woraus eine erste mögliche Schlitzstruktur ersichtlich ist;
- **Fig. 5**: eine vergrößerte Detailansicht B des Bremsrotors aus Fig. 4;
- **Fig. 6**: die Vorderansicht und eine Draufsicht auf einen Bremsrotor, woraus eine zweite mögliche Schlitzstruktur ersichtlich ist;
- **Fig. 7**: eine vergrößerte Detailansicht C des Bremsrotors aus Fig. 6;
- **Fig. 8**: die Vorderansicht und eine Draufsicht auf einen Bremsrotor, woraus eine mögliche Struktur von Aussparungen ersichtlich ist;

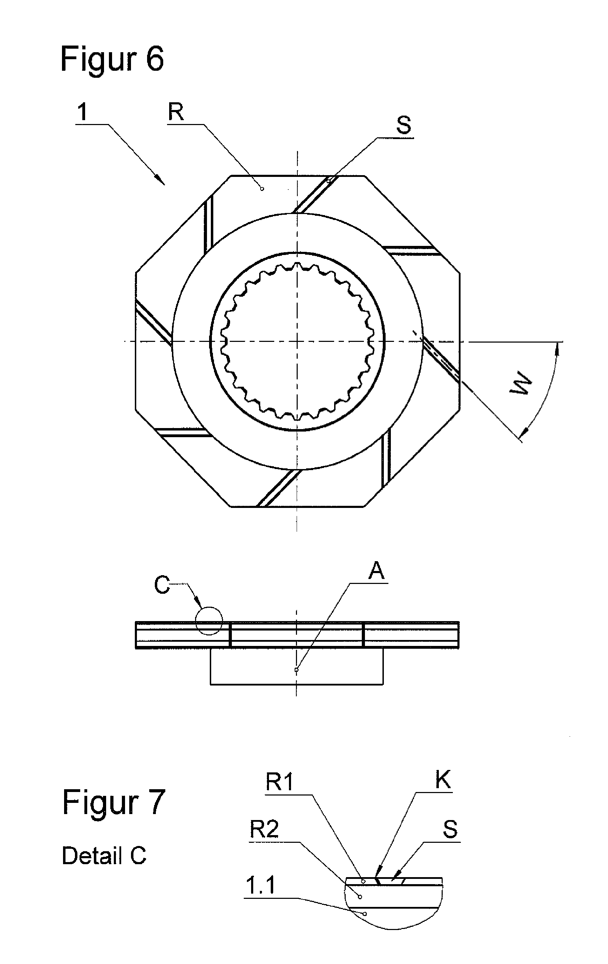

- **Fig. 7**: eine vergrößerte Detailansicht D des Bremsrotors aus Fig. 6;

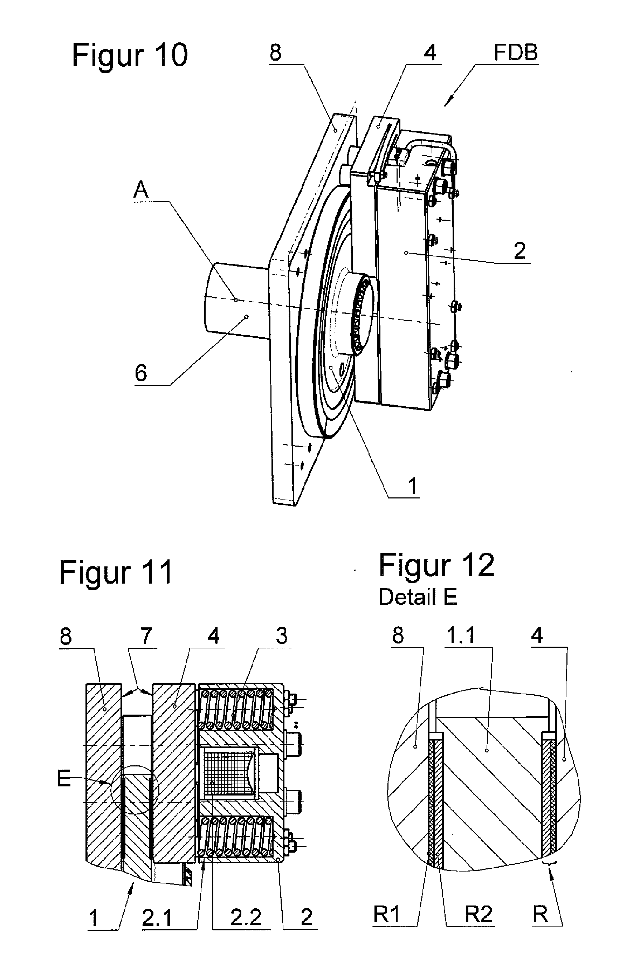

- **Fig. 10**: die räumliche Darstellung einer elektromagnetischen Aufzugsbremse, die seitlich zur Mittelachse versetzt ist;
- **Fig. 11**: einen Querschnitt durch die Aufzugsbremse aus Fig. 10;
- **Fig. 12**: eine vergrößerte Detailansicht E des Bremsrotors aus Fig. 11;

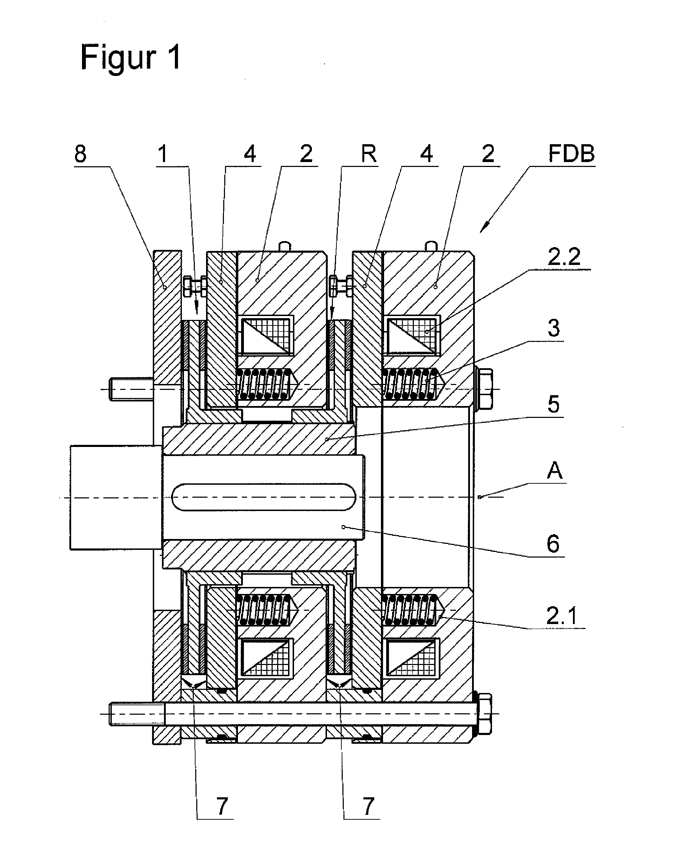

**Fig. 1** zeigt einen Vollschnitt durch eine elektromagnetische Federdruckbremse FDB für Aufzüge, in der Rotoren (1) Verwendung finden, die mit den erfindungsgemäßen Reibbelägen (R) bestückt sind. Die dargestellte Federdruckbremse (FDB) ist als Zweikreisbremse ausgeführt. Das bedeutet, dass im Sinne der Redundanz zwei mit einem Motorgehäuse oder Ähnlichem fest verbundene Spulenträger (2) mit darin angeordneten Federelementen (3), zwei in der Federdruckbremse (FDB) axial bewegliche und zur Mittelachse (A) der Federdruckbremse (FDB) drehfest gelagerte Ankerscheiben (4) und zwei Rotoren (1) vorhanden sind, wobei die Rotoren über eine außen verzahnte Nabe (5) mit der Welle (6) drehfest und axial beweglich verbunden sind. Die Bremswirkung der Federdruckbremse (FDB) kommt dadurch zustande, dass die in Federbohrungen (2.1) der Spulenträger (2) angeordneten Federelemente (3) gegen die Ankerscheiben (4) drücken und dadurch die Rotoren (1) zwischen den Gegenreibflächen (7) der Ankerscheiben (4) und den Gegenreibflächen (7) der Flanschplatte (8) und des einen Spulenträgers (2) einklemmen. Die Welle (6) wird somit über die mit ihr fest verbundene Nabe (5) und die drehfest mit der Nabe (5) verbundenen Rotoren (1) gehalten und an der Rotation gehindert.

Zum Öffnen der Federdruckbremse (FDB) werden die Elektromagnetspulen (2.2) der Spulenträger (2) mit einer elektrischen Stromquelle verbunden, wodurch sich zwischen den Spulenträgern (2) und den Ankerscheiben (4) Magnetfelder ausbilden, die die beiden Ankerscheiben (4) gegen die Kraft der Federelemente (3) zu den Spulenträgern (2) ziehen und somit die Bremswirkung auf die Rotoren (1) aufheben. Die Welle (6) ist dadurch wieder bezüglich der Mittelachse (A) frei drehbar.

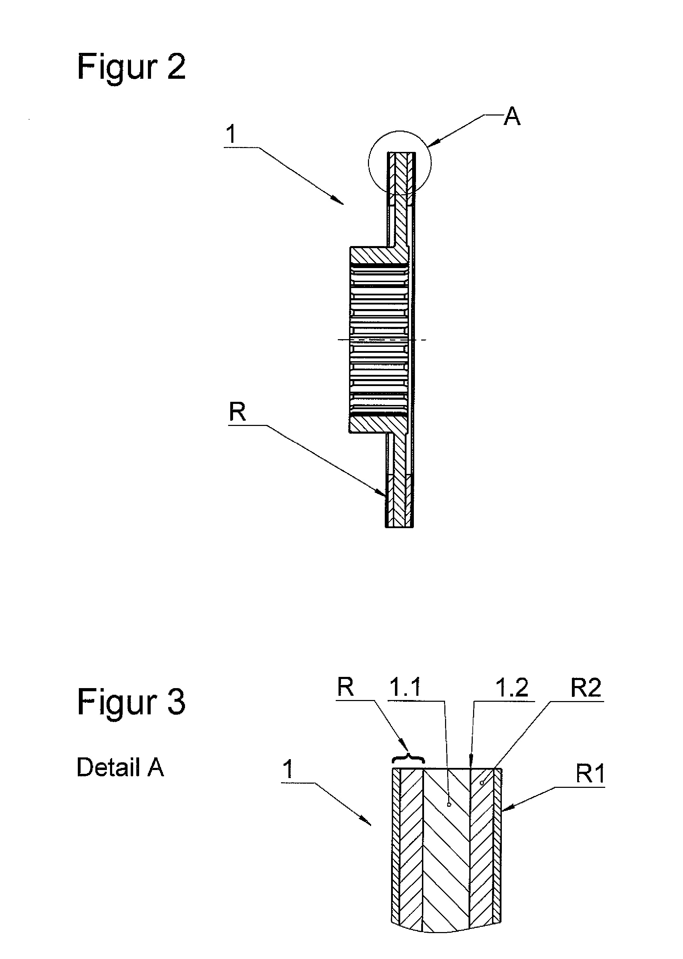

In **Fig. 2** ist der Querschnitt durch einen Rotor (1) mit dem erfindungsgemäßen und hier in Form eines Kreisringes ausgebildeten Reibbelag (R) dargestellt und **Fig. 3** zeigt mit **Detail A** einen Ausschnitt aus dem Rotor (1), woraus dessen grundsätzlicher Aufbau ersichtlich ist. Demnach besteht der Rotor (1) aus dem beispielsweise aus einem metallischen Werkstoff oder aus einem Faserverbundwerkstoff gebildeten Reibbelagträger (1.1) mit beiderseits angeordneten Reibbelägen (R). Die Reibbeläge (R) bestehen wiederum je aus einer Reibbelagschicht geringer Härte (R2) und einer Reibbelagschicht hoher Härte (R1).

Der aus den genannten zwei Schichten aufgebaute Reibbelag (R) wird in einem Durchgang gepresst, so dass sich zwischen der Reibbelagschicht geringer Härte (R2) und der Reibbelagschicht hoher Härte (R1) eine stoffschlüssige Verbindung ergibt. Lediglich zwischen den Reibbelägen (R) und dem Reibbelagträger (1.1) kann eine Klebeverbindung (1.2) vorgesehen sein.

Ebenso ist ein Verfahren denkbar, bei dem der Reibbelag (R) beim Pressen desselben auf den Reibbelagträger (1.1) aufgebracht wird, wobei zwischen dem Reibbelag (R) und dem Reibbelagträger (1.1) eine stoffschlüssige Verbindung entsteht.

Außerdem ist auch eine Verbindung zwischen Reibbelag (R) und Reibbelagträger (1.1) durch einen Vulkanisationsvorgang möglich.

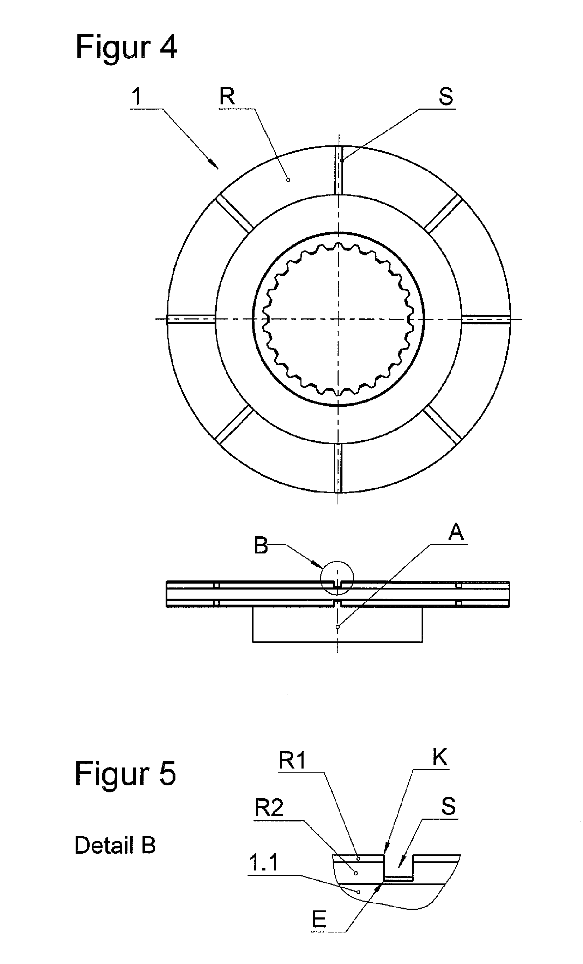

**Fig. 4** zeigt eine Vorderansicht des erfindungsgemäß mit den neuartigen Reibbelägen (R) ausgestatteten Rotors (1). Darin ist eine Struktur von Aussparungen (AS) oder Schlitzen (S) ersichtlich, die sich vom Innendurchmesser des kreisringförmigen Reibbelages (R) ausgehend in radialer Richtung bis zu dessen Außendurchmesser erstrecken. Es sind in **Fig. 4** exemplarisch 8 Schlitze (S) mit einem Winkelabstand von 45 Grad zueinander dargestellt.

Analog zu der beschriebenen gleichmäßigen Struktur mit einem Abstand von 45 Grad zwischen den Schlitzen oder Aussparungen ist natürlich auch eine gleichmäßig am Umfang verteilte Struktur mit einem anderen Abstand als 45 Grad oder eine Struktur mit ungleich am Umfang verteilten Aussparungen oder Schlitzen denkbar.

Aus **Fig. 5****, Detail B** ist ein möglicher rechteckiger Querschnitt der Schlitze (S) ersichtlich, wobei die Kanten (K) und/oder die Ecken (E) mit geeigneten Verrundungen oder Fasen versehen sein können. Die Tiefe der Schlitze (S) erstreckt sich im dargestellten Beispiel von der Oberfläche des Reibbelages (R) ausgehend bis in die Reibbelagschicht geringer Härte (R2), wobei auch denkbar ist, dass die Tiefe der Schlitze (S) nur den Reibbelag hoher Härte (R2) durchdringt oder dass die Tiefe der Schlitze (S) bis zum Reibbelagträger (1.1) reicht.

Die erfindungsgemässen Aussparungen (AS) oder Schlitze (S) haben in der Praxis mehrere positive Effekte: Thermische Verformungen der Reibbeläge (R) und des Rotors (1) sowie hohe mechanische Belastungen durch einseitigen Temperatureintrag in Kombination mit unterschiedlichen Wärmeausdehnungs-Koeffizienten der Reibbelagschicht geringer Härte (R2), der Reibbelagschicht hoher Härte (R1) und des Reibbelagträgers (1.1) werden durch die Aussparungen oder Schlitze eliminiert. Ein mögliches Verkleben der Reibbeläge (R) mit der Gegenreibfläche (7) aufgrund örtlicher thermischer Überlastung wird zudem verhindert. Schließlich wird durch die Schlitze (S) in bekannter Weise ein rascher Abtransport des eventuell entstehenden Abriebmaterials sichergestellt.

**Fig. 6** zeigt eine weitere Vorderansicht des mit den neuartigen Reibbelägen (R) ausgestatteten Rotors (1), wobei der Rotor und die ringförmigen Reibbeläge am Außendurchmesser eine polygonale Geometrie in Form eines Achteckes aufweisen. Darin ist eine Struktur von Schlitzen (S) ersichtlich, die sich ausgehend vom Innendurchmesser der Reibbeläge (R) des Rotors (1) radial bis zum Außendurchmesser der Reibbeläge (R) erstrecken, wobei die Schlitze (S) unter einem Anstellwinkel (W) zur radialen Richtung verlaufen. Es sind in **Fig. 6** exemplarisch wieder 8 über den Umfang gleichmäßig verteilte Schlitze (S) mit einem Winkelabstand von 45 Grad zueinander dargestellt, wobei auch hier ein anderer gleichmäßiger Winkelabstand als 45 Grad oder eine ungleichmäßige Verteilung mit unterschiedlichen Abständen zwischen den Schlitzen (S) denkbar ist.

Aus **Fig. 7****, Detail C** ist der trapezförmige Querschnitt der Schlitze (S) ersichtlich, wobei auch hier die Kanten (K) und/oder die Ecken (E) mit geeigneten Verrundungen oder Fasen versehen sein können. Die Tiefe der Schlitze (S) durchdringt im hier dargestellten Beispiel von der Oberfläche des Reibbelages (R) ausgehend nur die Reibbelagschicht hoher Härte (R1). Eine noch geringere Tiefe der Schlitze (S) oder eine Erstreckung der Schlitze (S) bis zum Reibbelagträger (1.1) ist hier auch möglich.

Gleichsam können sich die Schlitze (S) auch fast ausschließlich auf den Reibbelag geringer Härte (R2) erstrecken und diesen teilweise oder auf dessen gesamter Dicke durchdringen, wobei die Reibbelagschicht hoher Härte (R1) keine Schlitze (S) oder nur Schlitze geringer Tiefe aufweisen kann.

Weitere mögliche Querschnittsformen der Schlitze (S) können auch Dreiecke, Flächen, deren Umrisse von Kreisbögen gebildet werden, oder anders geformte Querschnittsflächen sein, wie sie unter fertigungstechnischen Aspekten optimal sind.

Ebenso sind analog zu **Fig. 4** und **Fig. 6** Schlitzstrukturen oder Aussparungen denkbar, deren Verlauf tangential am Innendurchmesser der Reibbeläge (R) beginnt. Ferner können die Schlitzstrukturen dem Verlauf von Spiralen, Zykloiden oder dazu verwandten geometrischen Kurven folgen.

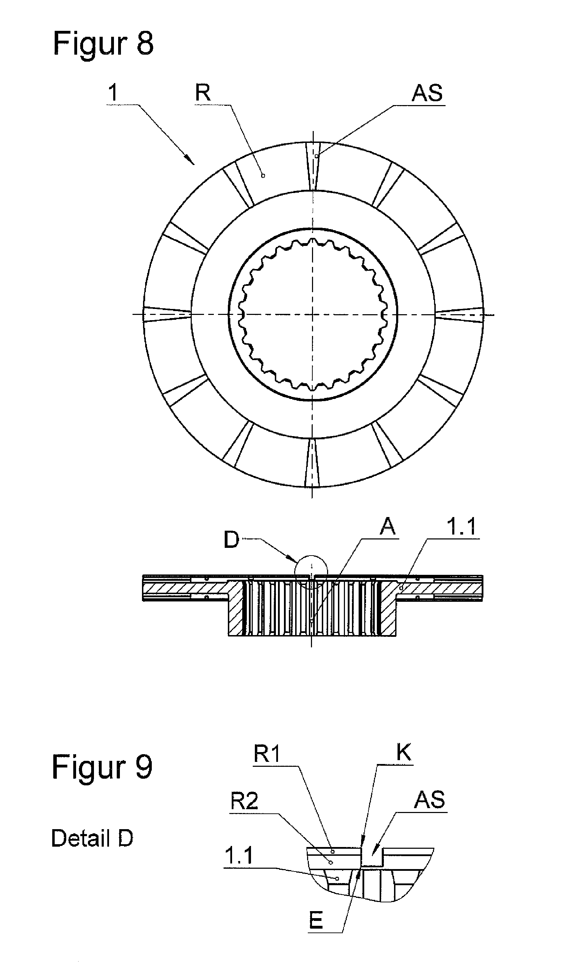

Aus **Fig. 8** ist eine weitere Vorderansicht des mit den erfindungsgemäßen neuartigen Reibbelägen (R) ausgestatteten Rotors (1) ersichtlich. Dabei wird eine Struktur von Aussparungen (AS) gezeigt, die sich wieder radial vom Innendurchmesser der Reibbeläge (R) des Rotors (1) ausgehend bis zum Außendurchmesser der Reibbeläge (R) erstrecken, wobei die Aussparungen (AS) in ihrem Verlauf eine unterschiedliche radial vom Innendurchmesser der Reibbeläge (R) zum Außendurchmesser der Reibbeläge (R) hin zunehmende Breite aufweisen. Ebenso ist es möglich, dass die Breite der Aussparungen (AS) in ihrem Verlauf vom Innendurchmesser zum Außendurchmesser abnimmt. In **Fig. 8** sind exemplarisch 12 über den Umfang gleichmäßig verteilte Aussparungen (AS) mit einem Winkelabstand von 30 Grad zueinander dargestellt, wobei auch hier ein anderer gleichmäßiger Winkelabstand als 30 Grad oder eine ungleichmäßige Verteilung mit unterschiedlichen Abständen zwischen den Aussparungen (AS) möglich ist.

Aus **Fig. 9****, Detail D** ist schließlich ein rechteckiger Querschnitt der Aussparungen (AS) ersichtlich, wobei auch hier die Kanten (K) und/oder die Ecken (E) mit geeigneten Verrundungen oder Fasen versehen sein können und wobei für die Aussparungen (AS) auch wieder trapezförmige oder dreieckige Querschnitte in Frage kommen oder solche Querschnittsflächen, deren Umrisse von Kreisbögen gebildet werden oder Querschnittsflächen wie sie unter fertigungstechnischen Aspekten optimal sind.

Ebenso ist eine Anordnung der Aussparungen (AS) in einem Anstellwinkel (W) möglich, dessen Wert sich zwischen 0 und 90 Winkelgrad bewegt, oder es kann ein Verlauf der Aussparungen (AS) vorgesehen sein, der dem Verlauf einer Spirale, einer Zykloide oder einer verwandten geometrischen Kurve folgt.

**Fig. 10** zeigt als Analogie zu **Fig. 1** die perspektivische Darstellung einer weiteren elektromagnetischen Federdruckbremse FDB für Aufzüge, in der Rotoren (1) Verwendung finden, die mit den erfindungsgemäßen Reibbelägen (R) bestückt sind. Auch die hier dargestellte Federdruckbremse (FDB) ist als Zweikreisbremse ausgeführt, wobei nur einer der beiden Bremskreise bestehend aus einem Spulenträger (2) und einer Ankerscheibe (4) dargestellt ist, wobei Spulenträger (2) und Ankerscheibe (4) der Federdruckbremse (FDB) zur Mittelachse (A) des Rotors (1) seitlich versetzt sind und wobei der Spulenträger (2) fest mit einer ortsfest angeordneten Flanschplatte (8) verbunden ist.

**Fig. 11** zeigt einen Querschnitt aus **Fig. 10****,** wobei der geschlossene Zustand der Federdruckbremse (FDB) dargestellt ist. Dabei wird die parallel zur Mittelachse (A) bewegliche Ankerscheibe (4) durch die in Federbohrungen (2.1) des Spulenträgers (2) befindlichen Federelemente (3) gegen den mit den erfindungsgemäßen Reibbelägen (R) bestückten und mit der Welle (6) drehfest verbundenen und axial beweglichen Rotor (1) gedrückt. Somit ist der Rotor (1) zwischen der Gegenreibfläche (7) der Ankerscheibe (4) und der Gegenreibfläche (7) der Flanschplatte (8) eingespannt und dadurch gemeinsam mit der Welle (6) drehfest fixiert.

Aus dem in **Fig. 12** gezeigten **Detail E** ist der Aufbau des aus dem Reibbelagträger (1.1) und den erfindungsgemäßen Reibbelägen (R) gebildeten Rotors (1) ersichtlich, wobei der Rotor (1) zwischen der Ankerscheibe (4) und der Flanschplatte (8) eingespannt ist. Der erfindungsgemäße Reibbelag (R) besteht auch hier aus zwei Schichten, einer Reibbelagschicht hoher Härte (R1) und einer Reibbelagschicht geringer Härte (R2).

### Bezugszeichenliste:

- A: Mittelachse
- AS: Aussparung
- E: Ecke
- FDB: Federdruckbremse
- K: Kante
- R: Reibbelag
- R1: Reibbelagschicht hoher Härte
- R2: Reibbelagschicht geringer Härte
- S: Schlitz
- W: Anstellwinkel

- 1: Rotor
- 1.1: Reibbelagträger
- 1.2: Klebeverbindung
- 2: Spulenträger
- 2.1: Federbohrung
- 2.2: Elektromagnetspule
- 3: Federelement
- 4: Ankerscheibe
- 5: Nabe
- 6: Welle
- 7: Gegenreibfläche
- 8: Flanschplatte
- 9: Führungsbolzen

## Patentansprüche

1. (Ringförmiger) Reibbelag für elektromagnetisch öffnende Federdruckbremsen (FDB) für Personen- und Lastenaufzüge, wobei der Reibbelag (R) in Richtung parallel zur Mittelachse (A) aus zwei Reibbelagschichten unterschiedlicher Härte besteht,
**dadurch gekennzeichnet,**
- **dass** die dem Reibbelagträger (1.1) zugewandte Schicht eine Reibbelagschicht geringer Härte (R2) ist,
- **dass** die der Gegenreibfläche (7) zugewandte Schicht eine Reibbelagschicht hoher Härte (R1) ist,
- und **dass** zur thermischen Entlastung des Reibbelages beim Bremsen und somit zum Erreichen möglichst geringer Verschleißwerte gegenüber metallischen und keramischen Gegenreibflächen (7) der Reibbelag (R) im Bereich der Reibbelagschicht geringerer Härte (R2) und/oder im Bereich der Reibbelagschicht hoher Härte (R1) mehrere vom Innendurchmesser des Reibbelages (R) zum Außendurchmesser des Reibbelages (R) verlaufende, umfangsmäßig verteilte, radial sich erstreckende Aussparungen (AS) oder Schlitze (S) aufweist, die sich ganz oder teilweise in die Tiefe des zweilagigen Reibbelages (R1, R2) hinein erstrecken.

2. Reibbelag nach Anspruch 1, **dadurch gekennzeichnet, dass** die Tiefe der Aussparungen (AS) oder Schlitze (S) die Reibbelagschicht hoher Härte (R1) ganz oder teilweise durchdringt, und dass die Aussparungen (AS) oder Schlitze (S) zur Gegenreibfläche (7) hin ganz oder teilweise offen sind.

3. Reibbelag nach Anspruch 1 oder 2, **dadurch gekennzeichnet, dass** die Tiefe der Aussparungen (AS) oder Schlitze (S) die Reibbelagschicht geringer Härte (R2) ganz oder teilweise durchdringt.

4. Reibbelag nach Anspruch 1 oder 3, **dadurch gekennzeichnet, dass** die Aussparungen (AS) oder Schlitze (S) im Inneren des Reibbelages (R) radial vom Innendurchmesser zum Außendurchmesser des Reibbelages (R) verlaufen und in Form geschlossener Kanäle eingebracht sind.

5. Reibbelag nach einem der Ansprüche 1 bis 4, **dadurch gekennzeichnet, dass** die Aussparungen (AS) oder Schlitze (S) überwiegend radial verlaufen.

6. Reibbelag nach einem der Ansprüche 1 bis 4, **dadurch gekennzeichnet, dass** die Aussparungen (AS) oder Schlitze (S) in einem Anstellwinkel (W) zur radialen Richtung verlaufen mit einem Anstellwinkel (W) größer als 0° und kleiner oder gleich 90°.

7. Reibbelag nach einem der Ansprüche 1 bis 4, **dadurch gekennzeichnet, dass** die Aussparungen (AS) oder Schlitze (S) radial in Form von Spiralen, Zykloiden oder dazu verwandten geometrischen Kurven verlaufen.

8. Reibbelag nach einem der voranstehenden Ansprüche, **dadurch gekennzeichnet, dass** die Aussparungen (AS) oder Schlitze (S) eine rechteckige oder trapezförmige oder dreieckige Querschnittsform aufweisen.

9. Reibbelag nach einem der Ansprüche 1 bis 7, **dadurch gekennzeichnet, dass** die Querschnittsfläche der Aussparung oder des Schlitzes einen Umriss aufweist, der aus einem oder mehreren Kreissegmenten besteht.

10. Reibbelag nach einem der voranstehenden Ansprüche, **dadurch gekennzeichnet, dass** der Reibbelag (R) eine polygonale Form mit n Ecken aufweist.

11. Reibbelag nach einem der voranstehenden Ansprüche, **dadurch gekennzeichnet, dass** die Reibbelagschicht geringer Härte (R2) eine Härte zwischen 30 und ca. 50 ShoreD aufweist und dass die Reibbelagschicht hoher Härte (R1) mindestens eine Härte von 65 ShoreD aufweist.

12. Reibbelag nach einem der voranstehenden Ansprüche, **dadurch gekennzeichnet, dass** die Reibbelagschicht geringer Härte (R2) und die Reibbelagschicht hoher Härte (R1) stoffschlüssig miteinander verbunden sind.

13. Verfahren zur Herstellung eines Reibbelages nach einem der voranstehenden Ansprüche, **dadurch gekennzeichnet, dass** die stoffschlüssige Verbindung zwischen den beiden Reibbelagschichten durch einen oder mehrere Press- und/oder Walzvorgänge hergestellt wird.

14. Verfahren nach Anspruch 13, **gekennzeichnet durch** eine der folgenden Alternativen:
- Pressen oder Walzen einer Kombination von losen Pulvermischungen für beide Reibbelagschichten.
- Pressen oder Walzen einer Kombination bestehend aus dem Vorpressling der ersten Reibbelagschicht und der losen Pulvermischung der zweiten Reibbelagschicht.
- Pressen oder Walzen einer Kombination bestehend aus je einem Vorpressling der Reibbelagschicht geringer Härte und einem Vorpressling der Reibbelagschicht hoher Härte.
